# EUROPEAN PATENT APPLICATION

(11) **EP 4 236 457 A1**
(43) Date of publication of application: **30.08.2023**
(21) Application number: 23158174.5
(22) Date of filing: 23.02.2023
(51) Int. Cl.: H04W 36/00, H04W 24/08

(54) **SCHEDULING RESTRICTION FOR L1-RSRP MEASUREMENT FOR CELL WITH DIFFERENT PCI**

(30) Priority: 23.02.2022 US 202263313138 P
(71) Applicant: INTEL Corporation, Santa Clara, CA 95054 (US)
(72) Inventor: CHERVYAKOV, Andrey, Maynooth, W23 XN36 (IE); BOLOTIN, Ilya, 603089 Nizhny Novgorod (RU); HUANG, Rui, Beijing, 100085 (CN); LI, Hua, Beijing, 100086 (CN); ZHANG, Meng, Beijing, 100000 (CN)
(74) Representative: Viering, Jentschura & Partner mbB Patent- und Rechtsanwälte

(57) **Abstract**

An apparatus of a New Radio (NR) User Equipment (UE) includes a radio frequency (RF) interface, and one or more processors coupled to the RF interface and configured to perform a Layer 1 Reference Signals Received Power (L1-RSRP) measurement according to a first scheduling restriction requirement that is defined for inside a Synchronization Signal Block-based Measurement Timing Configuration (SMTC); and perform an L1-RSRP measurement according to a second scheduling restriction requirement that is defined for outside a Synchronization Signal Block-based Measurement Timing Configuration (SMTC).

## Description

### CROSS-REFERENCE TO RELATED APPLICATIONS

This application claims priority to US Provisional Application 63/313,138, which was filed on February 23, 2022, the entire contents of which are hereby incorporated herein by reference.

### BACKGROUND

Various embodiments generally may relate to the field of wireless communications. For Rel-17 FeMIMO, L1-Reference Signal Receive Power (RSRP) measurements will be performed for cells with different Physical Layer Cell Identifiers (PCIs). A Synchronization Signal Block (SSB) used for L1-RSRP measurement for cells with different PCIs will conflict with data from both serving cells and cells with different PCIs. Accordingly, scheduling restrictions need to be defined for FR1 and FR2 in the RAN4 specification.

### BRIEF DESCRIPTION OF THE FIGURES

In the drawings, like reference characters generally refer to the same parts throughout the different views. The drawings are not necessarily to scale, emphasis instead generally being placed upon illustrating the exemplary principles of the disclosure. In the following description, various exemplary embodiments of the disclosure are described with reference to the following drawings, in which:
FIG. 1 depicts a network 100 in accordance with various embodiments;
FIG. 2 depicts a wireless network 200 in accordance with various embodiments; and
FIG. 3 shows a diagrammatic representation of hardware resources.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrases "A or B" and "A/B" mean (A), (B), or (A and B).

Various embodiments herein provide techniques for scheduling restriction for L1-RSRP for cells with different PCIs.

Embodiments may differentiate the case when an L1-RSRP is performed inside or outside an SSB-based Measurement Timing Configuration (SMTC). Additionally, or alternatively, embodiments may consider the data transmit/receive restriction for cell with different PCIs.

### When L1-RSRP measurement is performed inside SMTC

Scheduling availability of UE performing measurements in TDD bands on FR1. When the UE performs intra-frequency L1-RSRP measurements in a TDD band, the following restrictions apply due to L1-RSRP measurement.
- The UE is not expected to transmit PUCCH/PUSCH/SRS on SSB symbols to be measured, and on 1 data symbol before each consecutive SSB symbols to be measured and 1 data symbol after each consecutive SSB symbols to be measured within SMTC window duration. If the high layer in TS 38.331 [2] signalling of *smtc2* is configured, the SMTC periodicity follows *smtc2;* otherwise, SMTC periodicity follows *smtc1.*

Scheduling availability of UE performing measurements with a different subcarrier spacing than PDSCH/PDCCH on FR1.

For UE which do not support *simultaneousRxDataSSB-DiffNumerology* [14] the following restrictions apply due to L1-RSRP measurement:
- If *deriveSSB IndexFromCell* is enabled the UE is not expected to transmit PUCCH/PUSCH/SRS or receive PDCCH/PDSCH/TRS/CSI-RS for CQI on SSB symbols to be measured, and on 1 data symbol before each consecutive SSB symbols to be measured and 1 data symbol after each consecutive SSB symbols to be measured within SMTC window duration. If the high layer signalling of *smtc2* is configured (in TS 38.331 [2]), the SMTC periodicity follows *smtc2;* otherwise the SMTC periodicity follows *smtc1.*
- If *deriveSSB IndexFromCell* is not enabled the UE is not expected to transmit PUCCH/PUSCH/SRS or receive PDCCH/PDSCH/TRS/CSI-RS for CQI on all symbols within SMTC window duration. If the high layer signalling of *smtc2* is configured in TS 38.331 [2], the SMTC periodicity follows *smtc2;* otherwise, the SMTC periodicity follows *smtc1.*

Scheduling availability of UE performing measurements on FR2:
The following scheduling restriction applies due to L1-RSRP measurement on an FR2 intra-frequency cell. The UE is not expected to transmit PUCCH/PUSCH/SRS or receive PDCCH/PDSCH/TRS/CSI-RS for CQI on SSB symbols to be measured, and on 1 data symbol before each consecutive SSB symbols to be measured and 1 data symbol after each consecutive SSB symbols to be measured within SMTC window duration (The signaling *deriveSSB_IndexFromCell* is always enabled for FR2). If the high layer signaling of *smtc2* is configured in TS 38.331 [2], the SMTC periodicity follows *smtc2;* otherwise, the SMTC periodicity follows *smtc1.* The timing offset is still smaller than CP, and 1 extra symbol before or after SSB is not needed.

### When L1-RSRP measurement is performed outside SMTC

### Scheduling availability of UE performing L1-RSRP measurement on FR1

If UE support *simultaneousRxDataSSB-DiffNumerology,*
- there are no restrictions on scheduling availability for PUCCH/PUSCH/SRS transmission on serving cell or cell with different PCI due to L1-RSRP measurement.

If UE does not support *simultaneousRxDataSSB-DiffNumerology,* and if subcarrier spacing of PDSCH/PDCCH is different from subcarrier spacing of SSB on cell with different PCI,
- The UE is not expected to transmit PUCCH/PUSCH/SRS from both serving cell and cell with different PCI on SSB symbols configured for L1-RSRP measurement, and on 1 data symbol before each consecutive SSB symbols and 1 data symbol after each consecutive SSB symbols.

If timing offset between serving cell and cell with different PCI is smaller than CP, the scheduling restriction is as follows:
- The UE is not expected to transmit PUCCH/PUSCH/SRS from both serving cell and cell with different PCI on SSB symbols configured for L1-RSRP measurement.

Scheduling availability of UE performing L1-RSRP measurement on FR2. The following scheduling restriction applies due to L1-RSRP measurement.
- The UE is not expected to transmit PUCCH/PUSCH/SRS or receive PDCCH/PDSCH/CSI-RS from both serving cell and cell with different PCI for tracking/CSI-RS for CQI on symbols corresponding to the SSB symbols configured for L1-RSRP measurement, and on 1 data symbol before each consecutive SSB symbols and 1 data symbol after each consecutive SSB symbols.

If timing offset between serving cell and cell with different PCI is smaller than CP, the scheduling restriction is as follows:
- The UE is not expected to transmit PUCCH/PUSCH/SRS or receive PDCCH/PDSCH/CSI-RS from both serving cell and cell with different PCI for tracking/CSI-RS for CQI on symbols corresponding to the SSB symbols configured for L1-RSRP measurement.

### SYSTEMS AND IMPLEMENTATIONS

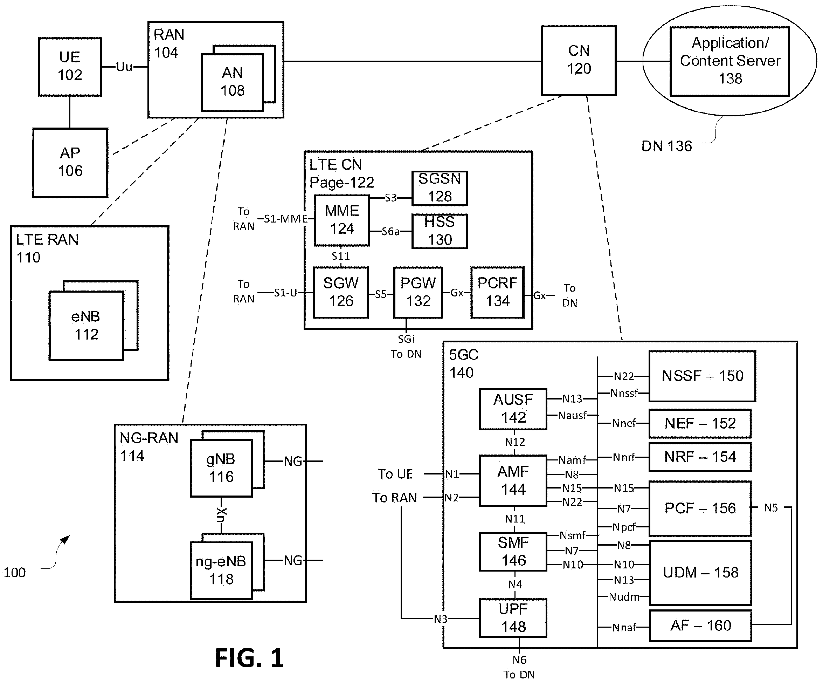

FIGs. 1-3 illustrate various systems, devices, and components that may implement aspects of disclosed embodiments.

FIG. 1 illustrates a network 100 in accordance with various embodiments. The network 100 may operate in a manner consistent with 3GPP technical specifications for LTE or SG/NR systems. However, the example embodiments are not limited in this regard and the described embodiments may apply to other networks that benefit from the principles described herein, such as future 3GPP systems, or the like.

The network 100 may include a UE 102, which may include any mobile or non-mobile computing device designed to communicate with a RAN 104 via an over-the-air connection. The UE 102 may be communicatively coupled with the RAN 104 by a Uu interface. The UE 102 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, M2M or D2D device, IoT device, etc.

In some embodiments, the network 100 may include a plurality of UEs coupled directly with one another via a sidelink interface. The UEs may be M2M/D2D devices that communicate using physical sidelink channels such as, but not limited to, PSBCH, PSDCH, PSSCH, PSCCH, PSFCH, etc. In some embodiments, the UE 102 may additionally communicate with an AP 106 via an over-the-air connection. The AP 106 may manage a WLAN connection, which may serve to offload some/all network traffic from the RAN 104. The connection between the UE 102 and the AP 106 may be consistent with any IEEE 802.11 protocol, wherein the AP 106 could be a wireless fidelity (Wi-Fi^{®}) router. In some embodiments, the UE 102, RAN 104, and AP 106 may utilize cellular WLAN
aggregation (for example, LWA/LWIP). Cellular-WLAN aggregation may involve the UE 102 being configured by the RAN 104 to utilize both cellular radio resources and WLAN resources. The RAN 104 may include one or more access nodes, for example, AN 108. AN 108 may terminate air-interface protocols for the UE 102 by providing access stratum protocols including RRC, PDCP, RLC, MAC, and L1 protocols. In this manner, the AN 108 may enable data/voice connectivity between CN 120 and the UE 102. In some embodiments, the AN 108 may be implemented in a discrete device or as one or more software entities running on server computers as part of, for example, a virtual network, which may be referred to as a CRAN or virtual baseband unit pool. The AN 1OB be referred to as a BS, gNB, RAN node, eNB, ng-eNB, NodeB, RSU, TRxP, TRP, etc. The AN 1OB may be a macrocell base station or a low power base station for providing femtocells, picocells or other like cells having smaller coverage areas, smaller user capacity, or higher
bandwidth compared to macrocells.

In embodiments in which the RAN 104 includes a plurality of ANs, they may be coupled with one another via an X2 interface (if the RAN 104 is an LTE RAN) or an Xn interface (if the RAN 104 is a SG RAN). The X2/Xn interfaces, which may be separated into control/user plane interfaces in some embodiments, may allow the ANs to communicate information related to handovers, data/context transfers, mobility, load management, interference coordination, etc.

The ANs of the RAN 104 may each manage one or more cells, cell groups, component carriers, etc. to provide the UE 102 with an air interface for network access. The UE 102 may be simultaneously connected with a plurality of cells provided by the same or different ANs of the RAN 104. For example, the UE 102 and RAN 104 may use carrier aggregation to allow the UE 102 to connect with a plurality of component carriers, each corresponding to a Pcell or Scell. In dual connectivity scenarios, a first AN may be a master node that provides an MCG and a second AN may be secondary node that provides an SCG. The first/ second AN s may be any combination of eNB, gNB, ng-eNB, etc.

The RAN 104 may provide the air interface over a licensed spectrum or an unlicensed spectrum. To operate in the unlicensed spectrum, the nodes may use LAA, eLAA, and/or feLAA mechanisms based on CA technology with PCells/Scells. Prior to accessing the unlicensed spectrum, the nodes may perform medium/carrier-sensing operations based on, for example, a listen-before-talk (LBT) protocol.

In V2X scenarios the UE 102 or AN 1OB may be or act as a RSU, which may refer to any transportation infrastructure entity used for V2X communications. An RSU may be implemented in or by a suitable AN or a stationary (or relatively stationary) UE. An RSU implemented in or by: a UE may be referred to as a "UE-type RSU"; an eNB may be referred to as an "eNB-type RSU"; a gNB may be referred to as a "gNB-type RSU"; and the like. In one example, an RSU is a computing device coupled with radio frequency circuitry located on a roadside that provides connectivity support to passing vehicle UEs. The RSU may also include internal data storage circuitry to store intersection map geometry, traffic statistics, media, as well as applications/software to sense and control ongoing vehicular and pedestrian traffic. The RSU may provide very low latency communications required for high speed events, such as crash avoidance, traffic warnings, and the like. Additionally or alternatively, the RSU may provide other cellular /WLAN communications services. The components of the RSU may be packaged in a weatherproof enclosure suitable for outdoor installation, and may include a network interface controller to provide a wired connection ( e.g., Ethernet) to a traffic signal controller or a backhaul network.

In some embodiments, the RAN 104 may be an L TE RAN 110 with eNBs, for example, eNB 112. The LTE RAN 110 may provide an LTE air interface with the following characteristics: SCS of 15 kHz; CP-OFDM waveform for DL and SC-FDMA waveform for UL; turbo codes for data and TBCC for control; etc. The L TE air interface may rely on CSI-RS for CSI acquisition and beam management; PDSCH/PDCCH DMRS for PDSCH/PDCCH demodulation; and CRS for cell search and initial acquisition, channel quality measurements, and channel estimation for coherent demodulation/detection at the UE. The LTE air interface may operating on sub-6 GHz bands.

In some embodiments, the RAN 104 may be an NG-RAN 114 with gNBs, for example, gNB 116, or ng-eNBs, for example, ng-eNB 118. The gNB 116 may connect with SG-enabled UEs using a SG NR interface. The gNB 116 may connect with a SG core through an NG interface, which may include an N2 interface or an N3 interface. The ng-eNB 118 may also connect with the SG core through an NG interface, but may connect with a UE via an LTE air interface. The gNB 116 and the ng-eNB 118 may connect with each other over an Xn interface.

In some embodiments, the NG interface may be split into two parts, an NG user plane (NG-U) interface, which carries traffic data between the nodes of the NG-RAN 114 and a UPF 148 (e.g., N3 interface), and an NG control plane (NG-C) interface, which is a signaling interface between the nodes of the NG-RAN114 and an AMF 144 (e.g., N2 interface).

The NG-RAN 114 may provide a SG-NR air interface with the following characteristics: variable SCS; CP-OFDM for DL, CP-OFDM and DFT-s-OFDM for UL; polar, repetition, simplex, and Reed-Muller codes for control and LDPC for data. The SG-NR air interface may rely on CSI-RS, PDSCH/PDCCH DMRS similar to the LTE air interface. The SG-NR air interface may not use a CRS, but may use PBCH DMRS for PBCH demodulation; PTRS for phase tracking for PDSCH; and tracking reference signal for time tracking. The SG-NR air interface may operating on FR1 bands that include sub-6 GHz bands or FR2 bands that include bands from 24.25 GHz to 52.6 GHz. The SG-NR air interface may include an SSB that is an area of a downlink resource grid that includes PSS/SSS/PBCH.

In some embodiments, the SG-NR air interface may utilize BWPs for various purposes. For example, BWP can be used for dynamic adaptation of the SCS. For example, the UE 102 can be configured with multiple BWPs where each BWP configuration has a different SCS. When a BWP change is indicated to the UE 102, the SCS of the transmission is changed as well. Another use case example of BWP is related to power saving. In particular, multiple BWPs can be configured for the UE 102 with different amount of frequency resources (for example, PRBs) to support data transmission under different traffic loading scenarios. A BWP containing a smaller number of PRBs can be used for data transmission with small traffic load while allowing power saving at the UE 102 and in some cases at the gNB 116. A BWP containing a larger number of PRBs can be used for scenarios with higher traffic load.

The RAN 104 is communicatively coupled to CN 120 that includes network elements to provide various functions to support data and telecommunications services to customers/subscribers (for example, users of UE 102). The components of the CN 120 may be implemented in one physical node or separate physical nodes. In some embodiments, NFV may be utilized to virtualize any or all of the functions provided by the network elements of the CN 120 onto physical compute/storage resources in servers, switches, etc. A logical instantiation of the CN 120 may be referred to as a network slice, and a logical instantiation of a portion of the CN 120 may be referred to as a network sub-slice.

In some embodiments, the CN 120 may be an LTE CN 122, which may also be referred to as an EPC. The LTE CN 122 may include MME 124, SGW 126, SGSN 128, HSS 130, PGW 132, and PCRF 134 coupled with one another over interfaces (or "reference points") as shown. Functions of the elements of the LTE CN 122 may be briefly introduced as follows.

The MME 124 may implement mobility management functions to track a current location of the UE 102 to facilitate paging, bearer activation/deactivation, handovers, gateway selection, authentication, etc.

The SGW 126 may terminate an S1 interface toward the RAN and route data packets between the RAN and the LTE CN 122. The SGW 126 maybe a local mobility anchor point for interRAN node handovers and also may provide an anchor for inter-3GPP mobility. Other responsibilities may include lawful intercept, charging, and some policy enforcement

The SGSN 128 may track a location of the UE 102 and perform security functions and
access control. In addition, the SGSN 128 may perform inter-EPC node signaling for mobility between different RAT networks; PDN and S-GW selection as specified by MME 124; MME selection for handovers; etc. The S3 reference point between the MME 124 and the SGSN 128 may enable user and bearer information exchange for inter-3GPP access network mobility in idle/active states.

The HSS 130 may include a database for network users, including subscription-related information to support the network entities' handling of communication sessions. The HSS 13 0 can provide support for routing/roaming, authentication, authorization, naming/addressing resolution, location dependencies, etc. An S6a reference point between the HSS 130 and the MME 124 may enable transfer of subscription and authentication data for authenticating/authorizing user access to the LTE CN 120.

The PGW 132 may terminate an SGi interface toward a data network (DN) 136 that may include an application/contentserver138. The PGW132 may route data packets between the LTE CN 122 and the data network 136. The PGW 132 may be coupled with the SGW 126 by an SS reference point to facilitate user plane tunneling and tunnel management The PGW 132 may further include a node for policy enforcement and charging data collection (for example, PCEF).

Additionally, the SGi reference point between the PGW 132 and the data network 136 may be an operator external public, a private PDN, or an intra-operator packet data network, for example, for provision of IMS services. The PGW 132 may be coupled with a PCRF 134 via a Gx reference point The PCRF 134 is the policy and charging control element of the L TE CN 122. The PCRF 134 may be communicatively coupled to the app/content server 138 to determine appropriate QoS and charging parameters for service flows. The PCRF 132 may provision associated rules into a PCEF (via Gx reference point) with appropriate TFT and QCI.

In some embodiments, the CN 120 may be a SGC 140. The SGC 140 may include an AUSF 142, AMF 144, SMF 146, UPF 148, NSSF 150, NEF 152, NRF 154, PCF 156, UDM 158, and AF 160 coupled with one another over interfaces (or "reference points") as shown. Functions of the elements of the SGC 140 may be briefly introduced as follows.

The AUSF 142 may store data for authentication of UE 102 and handle authentication related functionality. The AUSF 142 may facilitate a common authentication framework for various access types. In addition to communicating with other elements of the SGC 140 over reference points as shown, the AUSF 142 may exhibit an Nausf service-based interface. The AMF 144 may allow other functions of the SGC 140 to communicate with the UE 102 and the RAN 104 and to subscribe to notifications about mobility events with respect to the UE 102. The AMF 144 may be responsible for registration management (for example, for registering UE 102), connection management, reachability management, mobility management, lawful interception of AMF-related events, and access authentication and authorization. The AMF 144 may provide transport for SM messages between the UE 1022 and the SMF 146, and act as a transparent proxy for routing SM messages. AMF 144 may also provide transport for SMS messages between UE 102 and an SMSF. AMF 144 may interact with the AUSF 142 and the UE 102 to perform various security anchor and context management functions. Furthermore, AMF 144 may be a termination point of a RAN CP interface, which may include or be an N2 reference point between the RAN 104 and the AMF 144; and the AMF 144 may be a termination point of NAS (Nl) signaling, and perform NAS ciphering and integrity protection. AMF 144 may also support NAS signaling with the UE 102 over an N3 IWF interface.

The SMF 146 may be responsible for SM (for example, session establishment, tunnel management between UPF 148 and AN 108); UE IP address allocation and management (including optional authorization); selection and control of UP function; configuring traffic steering at UPF 148 to route traffic to proper destination; termination of interfaces toward policy control functions; controlling part of policy enforcement, charging, and QoS; lawful intercept (for SM events and interface to LI system); termination of SM parts of NAS messages; downlink data notification; initiating AN specific SM information, sent via AMF 144 over N2 to AN 108; and determining SSC mode of a session. SM may refer to management of a PDU session, and a PDU session or "session" may refer to a PDU connectivity service that provides or enables the exchange of PD Us between the UE 102 and the data network 136.

The UPF 148 may act as an anchor point for intra-RAT and inter-RAT mobility, an external PDU session point of interconnect to data network 136, and a branching point to support multihomed PDU session. The UPF 148 may also perform packet routing and forwarding, perform packet inspection, enforce the user plane part of policy rules, lawfully intercept packets (UP collection), perform traffic usage reporting, perform QoS handling for a user plane ( e.g., packet filtering, gating, UL/DL rate enforcement), perform uplink traffic verification (e.g., SDF-to-QoS flow mapping), transport level packet marking in the uplink and downlink, and perform downlink packet buffering and downlink data notification triggering. UPF 148 may include an uplink classifier to support routing traffic flows to a data network.

The NSSF 150 may select a set of network slice instances serving the UE 102. The NSSF 150 may also determine allowed NSSAI and the mapping to the subscribed S- NSSAis, if needed. The NSSF 150 may also determine the AMF set to be used to serve the UE 102, or a list of candidate AMFs based on a suitable configuration and possibly by querying the NRF 154. The selection of a set of network slice instances for the UE 102 may be triggered by the AMF 144 with which the UE 102 is registered by interacting with the NSSF 150, which may lead to a change of AMF. The NSSF 150 may interact with the AMF 144 via an N22 reference point; and may communicate with another NSSF in a visited network via an N31 reference point (not shown). Additionally, the NSSF 150 may exhibit an Nnssf service-based interface.

The NEF 152 may securely expose services and capabilities provided by 3GPP network functions for third party, internal exposure/re-exposure, AFs (e.g., AF 160), edge computing or fog computing systems, etc. In such embodiments, the NEF 152 may authenticate, authorize, or throttle the AFs. NEF 152 may also translate information exchanged with the AF 160 and information exchanged with internal network functions. For example, the NEF 152 may translate between an AF-Service-Identifier and an internal SGC information. NEF 152 may also receive information from other NFs based on exposed capabilities of other NFs. This information may be stored at the NEF 152 as structured data, or at a data storage NF using standardized interfaces. The stored information can then be re-exposed by the NEF 152 to other NFs and AFs, or used for other purposes such as analytics. Additionally, the NEF 152 may exhibit an Nnef service-based interface.

The NRF 154 may support service discovery functions, receive NF discovery requests from NF instances, and provide the information of the discovered NF instances to the NF instances. NRF 154 also maintains information of available NF instances and their supported services. As used herein, the terms "instantiate," "instantiation," and the like may refer to the creation of an instance, and an "instance" may refer to a concrete occurrence of an object, which may occur, for example, during execution of program code. Additionally, the NRF 154 may exhibit the Nnrf service-based interface.

The PCF 156 may provide policy rules to control plane functions to enforce them, and may also support unified policy framework to govern network behavior. The PCF 156 may also implement a front end to access subscription information relevant for policy decisions in a UDR of the UDM 15B. In addition to communicating with functions over reference points as shown, the PCF 156 exhibit an Npcf service-based interface.

The UDM 158 may handle subscription-related information to support the network entities' handling of communication sessions, and may store subscription data of UE 102. For example, subscription data may be communicated via an NB reference point between the UDM 158 and the AMF 144. The UDM 158 may include two parts, an application front end and a UDR The UDR may store subscription data and policy data for the UDM 158 and the PCF 156, and/or structured data for exposure and application data (including PFDs for application detection, application request information for multiple UEs 102) for the NEF 152. The Nudr service-based interface may be exhibited by the UDR 221 to allow the UDM 158, PCF 156, and NEF 152 to access a particular set of the stored data, as well as to read, update (e.g., add, modify), delete, and subscribe to notification of relevant data changes in the UDR. The UDM may include a UDM-FE, which is in charge of processing credentials, location management, subscription management and so on. Several different front ends may serve the same user in different transactions. The UDM-FE accesses subscription information stored in the UDR and performs authentication credential processing, user identification handling, access authorization, registration/mobility management, and subscription management. In addition to communicating with other NFs over reference points as shown, the UDM 158 may exhibit the Nudm service-based interface.

The AF 160 may provide application influence on traffic routing, provide access to NEF, and interact with the policy framework for policy control. In some embodiments, the SGC 140 may enable edge computing by selecting operator /3^{rd} party services to be geographically close to a point that the UE 102 is attached to the network. This may reduce latency and load on the network. To provide edge-computing implementations, the SGC 140 may select a UPF 148 close to the UE 102 and execute traffic steering from the UPF 148 to data network 136 via the N6 interface. This may be based on the UE subscription data, UE location, and information provided by the AF 160. In this way, the AF 160 may influence UPF (re)selection and traffic routing. Based on operator deployment, when AF 160 is considered to be a trusted entity, the network operator may permit AF 160 to interact directly with relevant NFs. Additionally, the AF 160 may exhibit an Naf service-based interface.

The data network 136 may represent various network operator services, Internet access, or third party services that may be provided by one or more servers including, for example, application/content server 138.

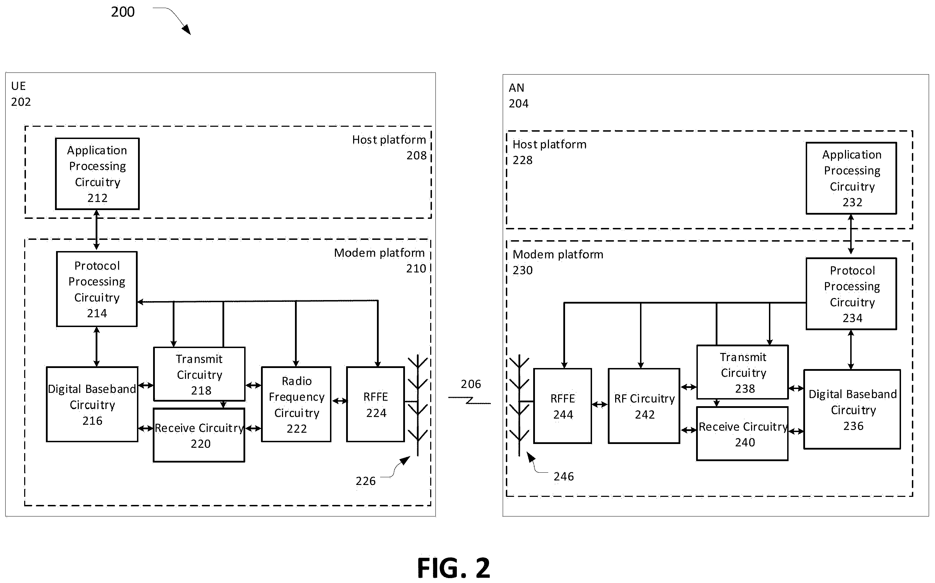

FIG. 2 schematically illustrates a wireless network 200 in accordance with various embodiments. The wireless network 200 may include a UE 202 in wireless communication with an AN 204. The UE 202 and AN 204 may be similar to, and substantially interchangeable with, like-named components described elsewhere herein.

The UE 202 may be communicatively coupled with the AN 204 via connection 206. The connection 206 is illustrated as an air interface to enable communicative coupling, and can be consistent with cellular communications protocols such as an LTE protocol or a 5 G NR protocol operating at mm Wave or sub-6GHz frequencies.

The UE 202 may include a host platform 208 coupled with a modem platform 210. The host platform 208 may include application processing circuitry 212, which may be coupled with protocol processing circuitry 214 of the modem platform 210. The application processing circuitry 212 may run various applications for the UE 202 that source/sink application data. The application processing circuitry 212 may further implement one or more layer operations to transmit/receive application data to/from a data network. These layer operations may include transport (for example UDP) and Internet (for example, IP) operations. The protocol processing circuitry 214 may implement one or more of layer operations to facilitate transmission or reception of data over the connection 206. The layer operations implemented by the protocol processing circuitry 214 may include, for example, MAC, RLC, PDCP, RRC and NAS operations.

The modem platform 210 may further include digital baseband circuitry 216 that may implement one or more layer operations that are "below" layer operations performed by the protocol processing circuitry 214 in a network protocol stack These operations may include, for example, PHY operations including one or more of HARQ-ACK functions, scrambling/ descrambling, encoding/decoding, layer mapping/de-mapping, modulation symbol mapping, received symbol/bit metric determination, multi-antenna port precoding/decoding, which may include one or more of space-time, space-frequency or spatial coding, reference signal generation/detection, preamble sequence generation and/or decoding, synchronization sequence generation/detection, control channel signal blind decoding, and other related functions.

The modem platform 210 may further include transmit circuitry 218, receive circuitry 220, RF circuitry 222, and RF front end (RFFE) 224, which may include or connect to one or more antenna panels 226. Briefly, the transmit circuitry 218 may include a digital-to-analog converter, mixer, intermediate frequency (IF) components, etc.; the receive circuitry 220 may include an analog-to-digital converter, mixer, IF components, etc.; the RF circuitry 222 may include a low-noise amplifier, a power amplifier, power tracking components, etc.; RFFE 224 may include filters (for example, surface/bulk acoustic wave filters), switches, antenna tuners, beamforming components (for example, phase-array antenna components), etc. The selection and arrangement of the components of the transmit circuitry 218, receive circuitry 220, RF circuitry 222, RFFE 224, and antenna panels 226 (referred generically as "transmit/receive components") may be specific to details of a specific implementation such as, for example, whether communication is TDM or FDM, in mm Wave or sub-6 gHz frequencies, etc. In some embodiments, the transmit/receive components may be arranged in multiple parallel transmit/receive chains, may be disposed in the same or different chips/modules, etc.

In some embodiments, the protocol processing circuitry 214 may include one or more instances of control circuitry (not shown) to provide control functions for the transmit/receive components. AUE reception may be established by and via the antenna panels 226, RFFE 224, RF circuitry 222, receive circuitry 220, digital baseband circuitry 216, and protocol processing circuitry 214. In some embodiments, the antenna panels 226 may receive a transmission from the AN 204 by receive-beamforming signals received by a plurality of antennas/antenna elements of the one or more antenna panels 226.

AUE transmission may be established by and via the protocol processing circuitry 214, digital baseband circuitry 216, transmit circuitry 218, RF circuitry 222, RFFE 224, and antenna panels 226. In some embodiments, the transmit components of the UE 204 may apply a spatial filter to the data to be transmitted to form a transmit beam emitted by the antenna elements of the antenna panels 226.

Similar to the UE 202, the AN 204 may include a host platform 228 coupled with a modem platform 230. The host platform 228 may include application processing circuitry 232 coupled with protocol processing circuitry 234 of the modem platform 230. The modem platform may further include digital baseband circuitry 236, transmit circuitry 238, receive circuitry 240, RF circuitry 242, RFFE circuitry 244, and antenna panels 246. The components of the AN 204 may be similar to and substantially interchangeable with like-named components of the UE 202. In addition to performing data transmission/reception as described above, the components of the AN 208 may perform various logical functions that include, for example, RNC functions such as radio bearer management, uplink and downlink dynamic radio resource management, and data packet scheduling.

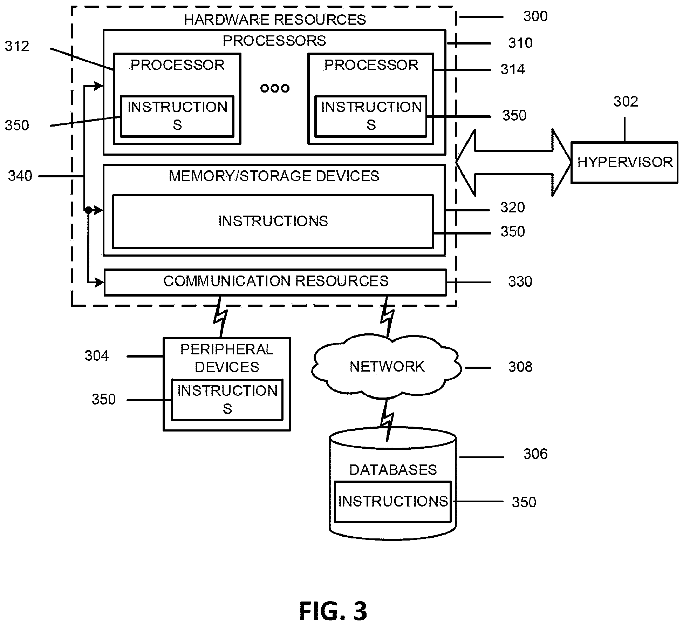

FIG. 2 is a block diagram illustrating components, according to some example embodiments, able to read instructions from a machine-readable or computer-readable medium (e.g., a non-transitory machine-readable storage medium) and perform any one or more of the methodologies discussed herein. Specifically, FIG. 3 shows a diagrammatic representation of hardware resources 300 including one or more processors (or processor cores) 310, one or more memory /storage devices 320, and one or more communication resources 330, each of which may be communicatively coupled via a bus 340 or other interface circuitry. For embodiments where node virtualization (e.g., NFV) is utilized, a hypervisor 302 may be executed to provide an execution environment for one or more network slices/ sub-slices to utilize the hardware resources 300.

The processors 310 may include, for example, a processor 312 and a processor 314. The processors 310 may be, for example, a central processing unit (CPU), a reduced instruction set computing (RISC) processor, a complex instruction set computing (CISC) processor, a graphics processing unit (GPU), a DSP such as a baseband processor, an ASIC, an FPGA, a radio-frequency integrated circuit (RFIC), another processor (including those discussed herein), or any suitable combination thereof.

The memory /storage devices 320 may include main memory, disk storage, or any suitable combination thereof. The memory /storage devices 320 may include, but are not limited to, any type of volatile, non-volatile, or semi-volatile memory such as dynamic random access memory (DRAM), static random access memory (SRAM), erasable programmable read-only memory (EPROM), electrically erasable programmable read-only memory (EEPROM), Flash memory, solid-state storage, etc.

The communication resources 330 may include interconnection or network interface controllers, components, or other suitable devices to communicate with one or more peripheral devices 304 or one or more databases 306 or other network elements via a network 308. For example, the communication resources 330 may include wired communication components (e.g., for coupling via USB, Ethernet, etc.), cellular communication components, NFC components, Bluetooth^{®} (or Bluetooth^{®} Low Energy) components, Wi-Fi^{®} components, and other communication components.

Instructions 350 may comprise software, a program, an application, an applet, an app, or other executable code for causing at least any of the processors 310 to perform any one or more of the methodologies discussed herein. The instructions 350 may reside, completely or partially, within at least one of the processors 310 (e.g., within the processor's cache memory), the memory /storage devices 320, or any suitable combination thereof. Furthermore, any portion of the instructions 350 may be transferred to the hardware resources 300 from any combination of the peripheral devices 304 or the databases 306. Accordingly, the memory of processors 310, the memory /storage devices 320, the peripheral devices 304, and the databases 306 are examples of computer-readable and machine-readable media.

For one or more embodiments, at least one of the components set forth in one or more of the preceding figures may be configured to perform one or more operations, techniques, processes, and/or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

### EXAMPLES

Example 1 may include the scheduling restriction requirement for L1-RSRP measurement is defined for inside SMTC and outside SMTC respectively.

Example 2 may include when L1-RSRP measurement is performed inside SMTC, Scheduling availability of UE performing measurements in TDD bands on FR1 is as follows:
When the UE performs intra-frequency L1-RSRP measurements in a TDD band, the following restrictions apply due to L1-RSRP measurement. The UE is not expected to transmit PUCCH/PUSCH/SRS on SSB symbols to be measured, and on 1 data symbol before each consecutive SSB symbols to be measured and 1 data symbol after each consecutive SSB symbols to be measured within SMTC window duration. If the high layer in TS 38.331 [2] signalling of *smtc2* is configured, the SMTC periodicity follows *smtc2;* otherwise SMTC periodicity follows *smtc1.*

Example 3 may include when L1-RSRP measurement is performed inside SMTC, scheduling availability of UE performing measurements with a different subcarrier spacing than PDSCH/PDCCH on FR1is as follows: For UE which do not support *simultaneousRxDataSSB-Dif!Numerology* [14] the following restrictions apply due to L1-RSRP measurement. If *deriveSSB IndexFromCell* is enabled the UE is not expected to transmit PUCCH/PUSCH/SRS or receive PDCCH/PDSCH/TRS/CSI-RS for CQI on SSB symbols to be measured, and on 1 data symbol before each consecutive SSB symbols to be measured and 1 data symbol after each consecutive SSB symbols to be measured within SMTC window duration. If the high layer signaling of *smtc2* is configured (in TS 3 8.3 31 [2]), the SMTC periodicity follows *smtc2;* otherwise the SMTC periodicity follows *smtc1.* If *deriveSSB IndexFromCell* is not enabled the UE is not expected to transmit PUCCH/PUSCH/SRS or receive PDCCH/PDSCH/TRS/CSI-RS for CQI on all symbols within SMTC window duration. If the high layer signaling of *smtc2* is configured in TS 38.331 [2], the SMTC periodicity follows *smtc2;* otherwise, the SMTC periodicity follows *smtc1.*

Example 4 may include when L1-RSRP measurement is performed inside SMTC, Scheduling availability of UE performing measurements on FR2 is as follows: The UE is not expected to transmit PUCCH/PUSCH/SRS or receive PDCCH/PDSCH/TRS/CSI-RS for CQI on SSB symbols to be measured, and on 1 data symbol before each consecutive SSB symbols to be measured and 1 data symbol after each consecutive SSB symbols to be measured within SMTC window duration (The signaling *deriveSSB_IndexFromCell*is always enabled for FR2). If the high layer signaling of *smtc2* is configured in TS 3 8.3 31 [2], the SMTC periodicity follows *smtc2;* Otherwise the SMTC periodicity follows *smtc1.*

Example 5 may include when L1-RSRP measurement is performed outside SMTC, Scheduling availability of UE performing L1-RSRP measurement on FR1 is as follows: If UE support *simultaneousRxDataSSB-Dif!Numerology,* there are no restrictions on scheduling availability for PUCCH/PUSCH/SRS transmission on serving cell or cell with different PCI due to L1-RSRP measurement.

If UE does not support *simultaneousRxDataSSB-DiffNumerology,* and if subcarrier spacing of PDSCH/PDCCH is different from subcarrier spacing of SSB on cell with different PCI, the UE is not expected to transmit PUCCH/PUSCH/SRS from both serving cell and cell with different PCI on SSB symbols configured for L1-RSRP measurement, and on 1 data symbol before each consecutive SSB symbols and 1 data symbol after each consecutive SSB symbols.

If timing offset between serving cell and cell with different PCI is smaller than CP, the scheduling restriction is as follows: The UE is not expected to transmit PUCCH/PUSCH/SRS from both serving cell and cell with different PCI on SSB symbols configured for L1-RSRP measurement.

Example 6 may include when L1-RSRP measurement is performed outside SMTC, scheduling availability of UE performing L1- RSRP measurement on FR2 is as follows: The UE is not expected to transmit PUCCH/PUSCH/SRS or receive PDCCH/PDSCH/CSI-RS from both serving cell and cell with different PCI for tracking/CSI-RS for CQI on symbols corresponding to the SSB symbols configured for L1-RSRP measurement, and on 1 data symbol before each consecutive SSB symbols and 1 data symbol after each consecutive SSB symbols.

If timing offset between serving cell and cell with different PCI is smaller than CP, the scheduling restriction is as follows: The UE is not expected to transmit PUCCH/PUSCH/SRS or receive PDCCH/PDSCH/CSI-RS from both serving cell and cell with different PCI for tracking/CSI-RS for CQI on symbols corresponding to the SSB symbols configured for L1-RSRP measurement

Example 7 may include an apparatus comprising means to perform one or more elements of a method described in or related to any of examples 1-6, or any other method or process described herein.

Example 8 may include one or more non-transitory computer-readable media comprising instructions to cause an electronic device, upon execution of the instructions by one or more processors of the electronic device, to perform one or more elements of a method described in or related to any of examples 1-6, or any other method or process described herein.

Example 9 may include an apparatus comprising logic, modules, or circuitry to perform one or more elements of a method described in or related to any of examples 1-6, or any other method or process described herein.

Example 10 may include a method, technique, or process as described in or related to any of examples 1-6, or portions or parts thereof.

Example 11 may include an apparatus comprising: one or more processors and one or more computer-readable media comprising instructions that, when executed by the one or more processors, cause the one or more processors to perform the method, techniques, or process as described in or related to any of examples 1-6, or portions thereof.

Example 12 may include a signal as described in or related to any of examples 1-6, or portions or parts thereof.

Example 13 may include a datagram, packet, frame, segment, protocol data unit (PDU), or message as described in or related to any of examples 1-6, or portions or parts thereof, or otherwise described in the present disclosure.

Example 14 may include a signal encoded with data as described in or related to any of examples 1-6, or portions or parts thereof, or otherwise described in the present disclosure.

Example 15 may include a signal encoded with a datagram, packet, frame, segment, protocol data unit (PDU), or message as described in or related to any of examples 1-6, or portions or parts thereof, or otherwise described in the present disclosure.

Example 16 may include an electromagnetic signal carrying computer-readable instructions, wherein execution of the computer-readable instructions by one or more processors is to cause the one or more processors to perform the method, techniques, or process as described in or related to any of examples 1-6, or portions thereof.

Example 17 may include a computer program comprising instructions, wherein execution of the program by a processing element is to cause the processing element to carry out the method, techniques, or process as described in or related to any of examples 1-6, or portions thereof.

Example 18 may include a signal in a wireless network as shown and described herein.

Example 19 may include a method of communicating in a wireless network as shown and described herein.

Example 20 may include a system for providing wireless communication as shown and described herein.

Example 21 may include a device for providing wireless communication as shown and described herein.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

### Abbreviations

Unless used differently herein, terms, definitions, and abbreviations may be consistent with terms, definitions, and abbreviations defined in 3GPP TR 21.905 v16.0.0 (2019-06). For the purposes of the present document, the following abbreviations may apply to the examples and embodiments discussed herein.

| | | |
|---|---|---|
| 3GPP Third Generation Partnership Project | AWGN Additive White Gaussian Noise | CDMA Code-Division Multiple Access |
| 4G Fourth Generation | | |
| 5G Fifth Generation | BAP Backhaul Adaptation Protocol | CDR Charging Data Request |
| SGC 5G Core network | | |
| AC Application Client | BCH Broadcast Channel | CDR Charging Data Response |
| | BER Bit Error Ratio | |
| ACR Application Context Relocation | BFD Beam Failure Detection | CFRA Contention Free Random Access |
| ACK Acknowledgement | BLER Block Error Rate | CG Cell Group |
| ACID Application Client Identification | BPSK Binary Phase Shift Keying | CGF Charging Gateway Function |
| AF Application Function | BRAS Broadband Remote Access Server | CHF Charging Function |
| AM Acknowledged | BSS Business Support System | CI Cell Identity |
| Mode | | CID Cell-ID (e.g., positioning method) |
| AMBR Aggregate | BS Base Station | |
| Maximum Bit Rate | BSR Buffer Status Report | CIM Common Information Model |
| AMF Access and Mobility Management Function | | |
| | BW Bandwidth | CIR Carrier to Interference Ratio |
| | BWP Bandwidth Part | |
| | C-RNTI Cell Radio | CK Cipher Key |
| AN Access Network | Network Temporary Identity | CM Connection Management, Conditional Mandatory |
| ANR Automatic Neighbour Relation | | |
| | CA Carrier | |
| AOA Angle of Arrival | Aggregation, Certification Authority | CMAS Commercial Mobile Alert Service |
| AP Application Protocol, Antenna Port, Access Point | CAPEX CAPital EXpenditure | CMD Command |
| | | CMS Cloud Management System |
| | CBRA Contention Based Random Access | |
| API Application Programming Interface | | CO Conditional Optional |
| | CC Component Carrier, Country Code, Cryptographic Checksum | |
| APN Access Point Name | | CoMP Coordinated Multi-Point |
| ARP Allocation and Retention Priority | | |
| | | CORESET Control Resource Set |
| ARQ Automatic Repeat Request | CCA Clear Channel Assessment | |
| | | COTS Commercial Off-The-Shelf |
| AS Access Stratum | CCE Control Channel Element | |
| ASP Application Service Provider | | CP Control Plane, |
| | CCCH Common Control Channel | Cyclic Prefix, Connection Point |
| ASN.1 Abstract Syntax Notation One | CE Coverage Enhancement | CPD Connection Point Descriptor |
| AUSF Authentication Server Function | CDM Content Delivery Network | CPE Customer Premise Equipment |
| CPICHCommon Pilot Channel | CSMA/CA CSMAwith collision avoidance | E2E End-to-End |
| | | EAS Edge Application Server |
| CQI Channel Quality Indicator | CSS Common Search Space, Cell- specific Search Space | |
| | | ECCA extended clear channel assessment, extended CCA |
| CPU CSI processing unit, Central Processing Unit | | |
| | CTF Charging Trigger Function | |
| | | ECCE Enhanced Control Channel Element, |
| C/R Command/Respons e field bit | CTS Clear-to-Send | |
| | CW Codeword | Enhanced CCE |
| | CWS Contention Window Size | ED Energy Detection |
| CRAN Cloud Radio Access Network, Cloud RAN | | EDGE Enhanced Datarates for GSM Evolution (GSM Evolution) |
| | D2D Device-to-Device | |
| | DC Dual Connectivity, Direct Current | |
| CRB Common Resource Block | | EAS Edge Application Server |
| | DCI Downlink Control Information | |
| CRC Cyclic Redundancy Check | | EASID Edge |
| | DF Deployment Flavour | Application Server Identification |
| CRI Channel-State Information Resource Indicator, CSI-RS Resource Indicator | | |
| | DL Downlink | ECS Edge Configuration Server |
| | DMTF Distributed Management Task Force | |
| | | ECSP Edge |
| C-RNTI Cell RNTI | DPDK Data Plane Development Kit | Computing Service Provider |
| CS Circuit Switched | | |
| CSCF call session control function | DM-RS, DMRS | EDN Edge Data Network |
| | Demodulation | |
| CSAR Cloud Service Archive | Reference Signal | EEC Edge Enabler Client |
| | DNData network | |
| CSI Channel-State Information | DNN Data Network Name | EECID Edge Enabler Client Identification |
| CSI-IM CSI Interference Measurement | DNAI Data Network Access Identifier | |
| | | EES Edge Enabler Server |
| CSI-RS CSI Reference Signal | DRB Data Radio Bearer | EESID Edge Enabler Server Identification |
| | DRS Discovery Reference Signal | |
| CSI-RSRP CSI reference signal received power | | |
| | DRX Discontinuous Reception | EHE Edge Hosting Environment |
| CSI-RSRQ CSI reference signal received quality | DSL Domain Specific Language. Digital Subscriber Line | EGMF Exposure Governance Management Function |
| CSI-SINR CSI signal-to-noise and interference ratio | DSLAM DSL Access Multiplexer | |
| | | EGPRS Enhanced |
| | DwPTS Downlink Pilot Time Slot | GPRS |
| CSMACarrier Sense | | EIR Equipment Identity Register |
| Multiple Access | E-LAN Ethernet Local Area Network | |
| eLAA enhanced Licensed Assisted Access, enhanced LAA | FACCH Fast Associated Control CHannel | G-RNTI GERAN Radio Network Temporary Identity |
| EM Element Manager eMBB Enhanced Mobile Broadband | FACCH/F Fast Associated Control Channel/Full rate | GERAN GSM EDGE RAN, GSM EDGE Radio Access Network |
| EMS Element | FACCH/H Fast Associated Control Channel/Half rate | |
| Management System eNB evolved NodeB, E-UTRAN Node B | | GGSN Gateway GPRS Support Node |
| | FACH Forward Access Channel | GLONASS GLObal'naya NAvigatsionnaya Sputnikovaya |
| EN-DC E-UTRA-NR Dual Connectivity | | |
| | FAUSCH Fast Uplink Signalling Channel | |
| EPC Evolved Packet Core | FB Functional Block | Sistema (Engl.: Global Navigation Satellite System) |
| | FBI Feedback | |
| EPDCCH enhanced | Information | |
| PDCCH, enhanced Physical Downlink Control Cannel | FCC Federal Communications | gNB Next Generation NodeB |
| | Commission | gNB-CU gNB-centralized unit, Next Generation NodeB centralized unit |
| EPRE Energy per resource element | FCCH Frequency Correction CHannel | |
| EPS Evolved Packet System | FDD Frequency Division | |
| | Duplex | gNB-DU gNB-distributed unit, Next Generation NodeB distributed unit |
| EREG enhanced REG, enhanced resource element groups | FDM Frequency Division Multiplex | |
| | FDMAFrequency Division Multiple Access | |
| ETSI European Telecommunications Standards Institute | | GNSS Global Navigation Satellite System |
| | FE Front End | |
| | FEC Forward Error Correction | GPRS General Packet Radio Service |
| ETWS Earthquake and Tsunami Warning System | | |
| | FFS For Further Study | GPSI Generic |
| | FFT Fast Fourier Transformation | Public Subscription Identifier |
| eUICC embedded UICC, | | |
| embedded Universal Integrated Circuit Card | feLAA further enhanced Licensed Assisted | GSM Global System for Mobile |
| E-UTRA Evolved UTRA | Access, further enhanced LAA | Communications, Groupe Spécial |
| E-UTRAN Evolved UTRAN | FN Frame Number | Mobile |
| | FPGA Field-Programmable Gate Array | GTP GPRS Tunneling |
| EV2X Enhanced V2X | | Protocol |
| F1AP F1 Application Protocol | | GTP-UGPRS Tunnelling Protocol for User Plane |
| | FR Frequency Range | |
| F1-C F1 Control plane interface | FQDN Fully Qualified Domain Name | |
| | | GTS Go To Sleep Signal (related to WUS) |
| F1-U F1 User plane interface | | |
| GUMMEI Globally Unique MME Identifier | ID Identity, identifier | IP-CAN IP-Connectivity Access Network |
| | IDFT Inverse Discrete Fourier Transform | |
| GUTI Globally Unique Temporary UE Identity | | |
| | IE Information element | IP-M IP Multicast |
| HARQ Hybrid ARQ, Hybrid Automatic Repeat Request | | IPv4 Internet Protocol Version 4 |
| | IBE In-Band Emission | |
| | | IPv6 Internet Protocol Version 6 |
| HANDO Handover | IEEE Institute of Electrical and Electronics Engineers | |
| HFN HyperFrame | | IR Infrared |
| Number | | IS In Sync |
| HHO Hard Handover | IEI Information | IRP Integration Reference Point |
| HLR Home Location Register | Element Identifier IEIDL Information Element Identifier Data Length | |
| | | ISDN Integrated Services |
| HN Home Network | | Digital Network |
| HO Handover | | ISIM IM Services |
| HPLMN Home | IETF Internet | Identity Module |
| Public Land Mobile Network | Engineering Task Force | ISO International Organisation for Standardisation |
| HSDPA High Speed | IF Infrastructure | |
| Downlink Packet Access | IIOT Industrial Internet of Things | ISP Internet Service Provider |
| HSN Hopping Sequence | IM Interference | IWF Interworking-Function |
| Number | Measurement, Intermodulation, IP Multimedia | |
| HSPA High Speed Packet Access | | I-WLAN Interworking WLAN Constraint length of the convolutional code, |
| HSS Home Subscriber | IMC IMS Credentials | |
| Server | IMEI International Mobile Equipment Identity | |
| HSUPA High Speed Uplink Packet Access | | |
| | | USIM Individual key |
| | IMGI International mobile group identity | kB Kilobyte (1000 bytes) |
| HTTP Hyper Text | | |
| Transfer Protocol | IMPI IP Multimedia | kbps kilo-bits per second |
| HTTPS Hyper Text | Private Identity | Kc Ciphering key |
| Transfer Protocol Secure (https is | IMPU IP Multimedia PUblic identity | Ki Individual subscriber authentication key |
| http/1.1 over SSL, | IMS IP Multimedia Subsystem | |
| i.e. port 443) | | KPI Key Performance Indicator |
| I-Block Information | IMSI International | |
| Block | Mobile Subscriber | KQI Key Quality Indicator |
| ICCID Integrated Circuit | Identity | |
| Card Identification | IoT Internet of Things | KSI Key Set Identifier |
| IAB Integrated Access | IP Internet Protocol | ksps kilo-symbols per second |
| and Backhaul | Ipsec IP Security, | |
| ICIC Inter-Cell Interference Coordination | Internet Protocol Security | KVM Kernel Virtual Machine |
| L1 Layer 1 (physical layer) | M2M Machine-to-Machine | MGRPMeasurement Gap Repetition Period |
| L1-RSRP Layer 1 reference signal received power | MAC Medium Access Control (protocol layering context) | MIB Master Information Block, Management Information Base |
| L2 Layer 2 (data link layer) | MAC Message authentication code (security/encryption context) | MIMO Multiple Input Multiple Output |
| L3 Layer 3 (network layer) | | MLC Mobile Location Centre |
| LAA Licensed Assisted Access | MAC-A MAC used for authentication and key agreement (TSG T WG3 context) | MM Mobility Management |
| LAN Local Area Network | | MME Mobility Management Entity |
| LADN Local Area Data Network | MAC-IMAC used for data integrity of signalling messages (TSG T WG3 context) | MN Master Node |
| | | MNO Mobile Network Operator |
| LBT Listen Before Talk | | |
| LCM LifeCycle Management | | MO Measurement Object, Mobile Originated |
| | MANO Management and Orchestration | |
| LCR Low Chip Rate | | |
| LCS Location Services | | MPBCH MTC |
| LCID Logical Channel ID | MBMS Multimedia Broadcast and Multicast Service | Physical Broadcast CHannel |
| LI Layer Indicator | | MPDCCH MTC |
| LLC Logical Link Control, Low Layer | MBSFN Multimedia Broadcast multicast service Single Frequency | Physical Downlink Control CHannel |
| Compatibility | | MPDSCH MTC Physical Downlink Shared CHannel |
| LMF Location Management Function | Network MCC Mobile Country | |
| LOS Line of Sight | Code | MPRACH MTC Physical Random |
| | MCG Master Cell Group | |
| LPLMN Local PLMN | MCOTMaximum Channel Occupancy Time | Access CHannel |
| | | MPUSCH MTC |
| LPP LTE Positioning Protocol | MCS Modulation and | Physical Uplink Shared |
| | coding scheme | Channel |
| LSB Least Significant Bit | MDAFManagement Data Analytics Function | MPLS MultiProtocol Label Switching |
| LTE Long Term Evolution | MDASManagement Data Analytics Service | MS Mobile Station |
| | | MSB Most Significant Bit |
| LWA LTE-WLAN aggregation | MDT Minimization of Drive Tests | |
| | | MSC Mobile Switching |
| LWIP LTE/WLAN Radio Level Integration with IPsec Tunnel | ME Mobile Equipment MeNB master eNB | Centre |
| | | MSI Minimum System Information, MCH Scheduling |
| | MER Message Error Ratio | |
| LTE Long Term Evolution | | |
| | MGL Measurement Gap Length | Information |
| MSID Mobile Station Identifier | NFV Network Functions Virtualization | NSA Non-Standalone operation mode |
| MSIN Mobile Station Identification Number | NFVI NFV Infrastructure | NSD Network Service Descriptor |
| | NFVO NFV Orchestrator | |
| | NG Next Generation, Next Gen | NSR Network Service Record |
| MSISDN Mobile Subscriber ISDN Number | | |
| | NGEN-DC NG-RAN E-UTRA-NR Dual | NSSAINetwork Slice Selection Assistance Information |
| MT Mobile Terminated, Mobile Termination | Connectivity | |
| | NM Network Manager | S-NNSAI Single-NSSAI |
| MTC Machine-Type Communications | NMS Network | |
| | Management System | NSSF Network Slice Selection Function |
| mMTCmassive MTC, | N-PoP Network Point of | |
| massive Machine-Type Communications | Presence | NW Network |
| | NMIB, N-MIB | NWUSNarrowband wake-up signal, Narrowband |
| MU-MIMO Multi User | Narrowband MIB | |
| MIMO | NPBCH Narrowband | WUS |
| MWUS MTC wake-up signal, MTC WUS | Physical Broadcast CHannel | NZP Non-Zero Power O&M Operation and Maintenance |
| | NPDCCH Narrowband | |
| NACKNegative Acknowledgement | Physical Downlink Control CHannel | ODU2 Optical channel Data Unit - type 2 |
| NAI Network Access Identifier | NPDSCH Narrowband | OFDM Orthogonal Frequency Division Multiplexing |
| | Physical Downlink | |
| NAS Non-Access Stratum, Non- Access Stratum layer | Shared CHannel | |
| | NPRACH Narrowband | OFDMA Orthogonal |
| | Physical Random | Frequency Division |
| NCT Network Connectivity Topology | Access CHannel | Multiple Access |
| | NPUSCH Narrowband | OOB Out-of-band |
| NC-JT Non-Coherent Joint Transmission | Physical Uplink | OOS Out of Sync |
| | Shared CHannel | OPEX OPerating EXpense |
| | NPSS Narrowband | OSI Other System Information |
| NEC Network Capability | Primary | |
| Exposure NE-DC NR-E- | Synchronization Signal | OSS Operations Support System |
| UTRA Dual Connectivity | NSSS Narrowband Secondary Synchronization | OTA over-the-air |
| | | PAPR Peak-to-Average Power Ratio |
| NEF Network Exposure Function | | |
| | Signal | PAR Peak to Average Ratio |
| NF Network Function | NR New Radio, Neighbour Relation | |
| NFP Network Forwarding Path | | PBCH Physical Broadcast Channel |
| | NRF NF Repository Function | |
| NFPD Network | | PC Power Control, Personal Computer |
| Forwarding Path Descriptor | NRS Narrowband Reference Signal | |
| | NS Network Service | |
| PCC Primary Component Carrier, Primary CC | PM Performance Measurement | PSTN Public Switched Telephone Network |
| | PMI Precoding Matrix | PT-RS Phase-tracking reference signal |
| P-CSCF Proxy CSCF | Indicator | |
| PCell Primary Cell | PNF Physical Network | PTT Push-to-Talk |
| PCI Physical Cell ID, | Function | PUCCH Physical |
| Physical Cell Identity | PNFD Physical Network | Uplink Control Channel |
| PCEF Policy and Charging Enforcement Function | Function Descriptor | |
| | PNFR Physical Network Function Record | PUSCH Physical Uplink Shared Channel |
| | POC PTT over Cellular | |
| PCF Policy Control Function | PP, PTP Point-to-Point | QAM Quadrature Amplitude Modulation |
| PCRF Policy Control and Charging Rules Function | PPP Point-to-Point Protocol | QCI QoS class of identifier |
| | PRACH Physical | QCL Quasi co-location |
| PDCP Packet Data Convergence Protocol, Packet Data Convergence Protocol layer | RACH | QFI QoS Flow ID, QoS |
| | PRB Physical resource | Flow Identifier |
| | block | QoS Quality of Service |
| | PRG Physical resource block group | QPSK Quadrature (Quaternary) Phase Shift |
| PDCCH Physical | ProSe Proximity Services, Proximity-Based Service | Keying |
| Downlink Control Channel | | QZSS Quasi-Zenith |
| | | Satellite System |
| PDCP Packet Data Convergence Protocol | PRS Positioning Reference Signal | RA-RNTI Random Access RNTI |
| PDN Packet Data Network, Public Data | PRR Packet Reception Radio | RAB Radio Access Bearer, Random Access Burst |
| Network | PS Packet Services | |
| PDSCH Physical Downlink Shared Channel | PSBCH Physical Sidelink Broadcast Channel | RACH Random Access |
| | | Channel |
| | | RADIUS Remote Authentication Dial In User Service |
| PDU Protocol Data Unit | PSDCH Physical | |
| PEI Permanent Equipment Identifiers | Sidelink Downlink Channel | |
| | | RAN Radio Access |
| PFD Packet Flow | PSCCH Physical | Network |
| Description P-GW PDN Gateway | Sidelink Control Channel | RAND RANDom number (used for authentication) |
| PHICH Physical | PSSCH Physical | |
| hybrid-ARQ indicator channel | Sidelink Shared Channel | RAR Random Access Response |
| PHY Physical layer | PSCell Primary SCell | RAT Radio Access Technology |
| PLMNPublic Land Mobile Network | PSS Primary Synchronization Signal | |
| | | RAU Routing Area Update |
| PIN Personal Identification Number | | |
| RB Resource block, | RS Reference Signal | SCEF Service |
| Radio Bearer | RSRP Reference Signal | Capability Exposure Function |
| RBG Resource block group | Received Power | |
| | RSRQ Reference Signal | SC-FDMA Single Carrier Frequency Division Multiple Access |
| REG Resource Element Group | Received Quality | |
| | RSSI Received Signal | |
| Rel Release | Strength Indicator | |
| REQ REQuest | RSU Road Side Unit | SCG Secondary Cell Group |
| RF Radio Frequency | RSTD Reference Signal | |
| RI Rank Indicator | Time difference | SCM Security Context Management |
| RIV Resource indicator value | RTP Real Time Protocol | |
| | RTS Ready-To-Send | SCS Subcarrier Spacing |
| RL Radio Link | RTT Round Trip Time | SCTP Stream Control Transmission Protocol |
| RLC Radio Link Control, Radio Link Control layer | Rx Reception, Receiving, Receiver | |
| | S1AP S1 Application Protocol | SDAP Service Data |
| RLC AM RLC | | Adaptation Protocol, |
| Acknowledged Mode RLC UM RLC | S1-MME S1 for the control plane | Service Data Adaptation Protocol layer |
| Unacknowledged Mode | S1-U S1 for the user plane | SDL Supplementary Downlink |
| RLF Radio Link Failure | | |
| RLM Radio Link Monitoring | S-CSCF serving | SDNF Structured Data Storage Network Function |
| | CSCF | |
| RLM-RS Reference Signal for RLM | S-GW Serving Gateway | |
| | S-RNTI SRNC | SDP Session Description Protocol |
| RM Registration Management | Radio Network Temporary Identity | |
| | | SDSF Structured Data |
| RMC Reference Measurement Channel | S-TMSI SAE Temporary Mobile Station Identifier | Storage Function |
| | | SDT Small Data Transmission |
| RMSI Remaining MSI, Remaining Minimum System Information | | |
| | SA Standalone operation mode | SDU Service Data Unit |
| | | SEAF Security Anchor Function |
| RN Relay Node | SAE System Architecture Evolution | |
| RNC Radio Network Controller | | SeNB secondary eNB |
| | SAP Service Access Point | SEPP Security Edge |
| RNL Radio Network Layer | | Protection Proxy |
| | SAPD Service Access | SFI Slot format indication |
| RNTI Radio Network Temporary Identifier | Point Descriptor | |
| | SAPI Service Access | SFTD Space-Frequency Time Diversity, SFN and frame timing difference |
| ROHC RObust Header Compression | Point Identifier | |
| | SCC Secondary | |
| RRC Radio Resource Control, Radio | Component Carrier, Secondary CC | SFN System Frame Number |
| Resource Control layer | SCell Secondary Cell | SgNB Secondary gNB |
| RRM Radio Resource Management | | SGSN Serving GPRS Support Node |
| S-GW Serving Gateway | SS/PBCH Block | TBS Transport Block Size |
| SI System Information | SSBRI SS/PBCH Block | |
| SI-RNTI System Information RNTI | Resource Indicator, | TBD To Be Defined |
| | Synchronization Signal Block | TCI Transmission Configuration Indicator |
| SIB System Information Block | | |
| | Resource Indicator | TCP Transmission Communication Protocol |
| SIM Subscriber Identity | SSC Session and Service Continuity | |
| Module | | |
| SIP Session Initiated Protocol | SS-RSRP Synchronization | TDD Time Division |
| | | Duplex |
| SiP System in Package | Signal based Reference | TDM Time Division |
| SL Sidelink | Signal Received Power | Multiplexing |
| SLA Service Level Agreement | | TDMATime Division Multiple Access |
| | SS-RSRQ Synchronization | |
| SM Session Management | | TE Terminal Equipment |
| | Signal based Reference | |
| SMF Session Management Function | Signal Received Quality | TEID Tunnel End Point |
| | | Identifier |
| SMS Short Message Service | SS-SINR Synchronization | TFT Traffic Flow |
| | | Template |
| SMSF SMS Function | Signal based Signal to | TMSI Temporary Mobile Subscriber Identity |
| SMTC SSB-based Measurement Timing Configuration | Noise and Interference Ratio | |
| | | TNL Transport Network |
| | SSS Secondary | Layer |
| SN Secondary Node, Sequence Number | Synchronization Signal | TPC Transmit Power Control |
| SoC System on Chip | SSSG Search Space Set Group | TPMI Transmitted Precoding Matrix Indicator |
| SON Self-Organizing | | |
| Network | SSSIF Search Space Set | |
| SpCell Special Cell | Indicator | TR Technical Report TRP, TRxP Transmission Reception Point |
| SP-CSI-RNTISemi- | SST Slice/Service Types | |
| Persistent CSI RNTI | SU-MIMO Single User | |
| SPS Semi-Persistent Scheduling | MIMO | |
| | SUL Supplementary Uplink | TRS Tracking Reference Signal |
| SQN Sequence number | | |
| SR Scheduling Request | TA Timing Advance, Tracking Area | TRx Transceiver |
| SRB Signalling Radio Bearer | | TS Technical Specifications, Technical Standard |
| | TAC Tracking Area Code | |
| SRS Sounding Reference Signal | | |
| | TAG Timing Advance Group | TTI Transmission Time Interval |
| SS Synchronization Signal | | |
| | TAI Tracking Area Identity | Tx Transmission, Transmitting, |
| SSB Synchronization Signal Block | | |
| | TAU Tracking Area Update | Transmitter |
| SSID Service Set Identifier | | |
| | TB Transport Block | |
| U-RNTI UTRAN Radio Network Temporary Identity | UTRAN Universal Terrestrial Radio Access Network | WPANWireless Personal Area Network |
| | | X2-C X2-Control plane |
| UART Universal Asynchronous Receiver and Transmitter | UwPTS Uplink Pilot Time Slot | X2-U X2-User plane |
| | | XML eXtensible Markup Language |
| | V2I Vehicle-to-Infrastruction | |
| | | XRES EXpected user RESponse |
| UCI Uplink Control Information | V2P Vehicle-to-Pedestrian | |
| | | XOR eXclusive OR |
| UE User Equipment | V2V Vehicle-to-Vehicle | ZC Zadoff-Chu |
| UDM Unified Data | V2X Vehicle-to-everything | ZP Zero Power |
| Management | | |
| UDP User Datagram Protocol | VIM Virtualized Infrastructure Manager | |
| UDSF Unstructured Data Storage Network Function | VL Virtual Link, | |
| | VLAN Virtual LAN, Virtual Local Area Network | |
| UICC Universal Integrated Circuit Card | | |
| | VM Virtual Machine | |
| UL Uplink | VNF Virtualized Network Function | |
| UM Unacknowledged Mode | | |
| | VNFFG VNF Forwarding Graph | |
| UML Unified Modelling Language | | |
| | VNFFGD VNF Forwarding Graph Descriptor | |
| UMTS Universal Mobile Telecommunication s System | | |
| | VNFMVNF Manager | |
| UP User Plane | VoIP Voice-over-IP, Voice-over- Internet Protocol | |
| UPF User Plane Function | | |
| URI Uniform Resource Identifier | VPLMN Visited Public Land Mobile Network | |
| URL Uniform Resource Locator | | |
| | VPN Virtual Private Network | |
| URLLC Ultra-Reliable and Low Latency | | |
| | VRB Virtual Resource Block | |
| USB Universal Serial Bus | WiMAX Worldwide Interoperability for Microwave Access | |
| USIM Universal Subscriber Identity Module | | |
| | WLAN Wireless | |
| USS UE-specific search space | Local Area Network | |
| | WMAN Wireless | |
| UTRA UMTS Terrestrial Radio Access | Metropolitan Area Network | |

### Terminology:

For the purposes of the present document, the following terms and definitions are applicable to the examples and embodiments discussed herein.

The term "circuitry" as used herein refers to, is part of, or includes hardware components such as an electronic circuit, a logic circuit, a processor (shared, dedicated, or group) and/or memory (shared, dedicated, or group), an Application Specific Integrated Circuit (ASIC), a field-programmable device (FPD) ( e.g., a field programmable gate array (FPGA), a programmable logic device (PLO), a complex PLD (CPLD), a high-capacity PLD (HCPLD), a structured ASIC, or a programmable SoC), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements ( or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, and/or transferring digital data. Processing circuitry may include one or more processing cores to execute instructions and one or more memory structures to store program and data information. The term "processor circuitry" may refer to one or more application processors, one or more baseband processors, a physical central processing unit (CPU), a single-core processor, a dual-core processor, a triple-core processor, a quadcore processor, and/or any other device capable of executing or otherwise operating computer-executable instructions, such as program code, software modules, and/or functional processes. Processing circuitry may include more hardware accelerators, which may be microprocessors, programmable processing devices, or the like. The one or more hardware accelerators may include, for example, computer vision (CV) and/or deep learning (DL) accelerators. The terms "application circuitry" and/or "baseband circuitry" may be considered synonymous to, and may be referred to as, "processor circuitry."

The term "interface circuitry" as used herein refers to, is part of, or includes circuitry that enables the exchange of information between two or more components or devices. The term "interface circuitry" may refer to one or more hardware interfaces, for example, buses, IjO interfaces, peripheral component interfaces, network interface cards, and/or the like.

The term "user equipment" or "UE" as used herein refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface.

The term "network element" as used herein refers to physical or virtualized equipment and/or infrastructure used to provide wired or wireless communication network services. The term "network element" may be considered synonymous to and/or referred to as a networked computer, networking hardware, network equipment, network node, router, switch, hub, bridge, radio network controller, RAN device, RAN node, gateway, server, virtualized VNF, NFVI, and/or the like.

The term "computer system" as used herein refers to any type interconnected electronic devices, computer devices, or components thereof. Additionally, the term "computer system" and/or "system" may refer to various components of a computer that are communicatively coupled with one another. Furthermore, the term "computer system" and/or "system" may refer to multiple computer devices and/or multiple computing systems that are communicatively coupled with one another and configured to share computing and/or networking resources.

The term "appliance," "computer appliance," or the like, as used herein refers to a computer device or computer system with program code ( e.g., software or firmware) that is specifically designed to provide a specific computing resource. A "virtual appliance" is a virtual machine image to be implemented by a hypervisor-equipped device that virtualizes or emulates a computer appliance or otherwise is dedicated to provide a specific computing resource.

The term "resource" as used herein refers to a physical or virtual device, a physical or virtual component within a computing environment, and/or a physical or virtual component within a particular device, such as computer devices, mechanical devices, memory space, processor /CPU time, processor /CPU usage, processor and accelerator loads, hardware time or usage, electrical power, input/output operations, ports or network sockets, channeljlink allocation, throughput, memory usage, storage, network, database and applications, workload units, and/or the like. A "hardware resource" may refer to compute, storage, and/or network resources provided by physical hardware element(s). A "virtualized resource" may refer to compute, storage, and/or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing and/or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with and/ or equivalent to "communications channel," "data communications channel," "transmission channel," "data transmission channel," "access channel," "data access channel," "link," "data link," "carrier," "radiofrequency carrier," and/or any other like term denoting a pathway or medium through which data is communicated. Additionally, the term "link" as used herein refers to a connection between two devices through a RAT for the purpose of transmitting and receiving information.

The terms "instantiate," "instantiation," and the like as used herein refers to the creation of an instance. An "instance" also refers to a concrete occurrence ofan object, which may occur, for example, during execution of program code.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or link, and/or the like.

The term "information element" refers to a structural element containing one or more fields. The term "field" refers to individual contents of an information element, or a data element that contains content.

The term "SMTC" refers to an SSB-based measurement timing configuration configured by *SSBMeasurementTimingConfiguration.* The term "SSB" refers to an SS/PBCH block

The term "a "Primary Cell" refers to the MCG cell, operating on the primary frequency, in which the UE either performs the initial connection establishment procedure or initiates the connection re-establishment procedure.

The term "Primary SCG Cell" refers to the SCG cell in which the UE performs random access when performing the Reconfiguration with Sync procedure for DC operation.

The term "Secondary Cell" refers to a cell providing additional radio resources on top ofa Special Cell for a UE configured with CA. The term "Secondary Cell Group" refers to the subset of serving cells comprising the PSCell and zero or moresecondary cells for a UE configured with DC.

The term "Serving Cell" refers to the primary cell for a UE in RRC_CONNECTED not configured with CA/DC there is only one serving cell comprising of the primary cell.

The term "serving cell" or "serving cells" refers to the set of cells comprising the Special Cell( s) and all secondary cells for a UE in RRC_CONNECTED configured with CA.

The term "Special Cell" refers to the PCell of the MCG or the PSCell of the SCG for DC operation; otherwise, the term "Special Cell" refers to the Pcell.

## Claims

1. An apparatus of a New Radio (NR) User Equipment (UE) (202), the apparatus including a radio frequency (RF) interface, and one or more processors (214) coupled to the RF interface and configured to:
perform a Layer 1 Reference Signals Received Power (L1-RSRP) measurement that is defined for inside a Synchronization Signal Block-based Measurement Timing Configuration (SMTC) and outside the SMTC, respectively.

2. The apparatus of claim 1, wherein the one or more processors (214) performing the L1-RSRP measure comprises the one or more processors (214) performing the L1-RSRP measurement according to a first scheduling restriction requirement that is defined for inside a Synchronization Signal Block-based Measurement Timing Configuration (SMTC); and perform an L1-RSRP measurement according to a second scheduling restriction requirement that is defined for outside a Synchronization Signal Block-based Measurement Timing Configuration (SMTC).

3. The apparatus of claim 2, wherein the one or more processors (214) performing the RSRP measurement according to the first scheduling restriction for inside SMTC comprises the one or more processors (214) being configured to not transmit PUCCH/PUSCH/SRS on Synchronization Signal Block (SSB) symbols to be measured, and on 1 data symbol before each consecutive SSB symbols to be measured and on 1 data symbol after each consecutive SSB symbols to be measured within the SMTC window duration, when the UE (202) performs intra-frequency L1-RSRP measurements in a Time Division Duplex (TDD) band.

4. The apparatus of claim 1 or 3, wherein, if a high layer in TS 38.331 signaling of *smtc2* is configured, the one or more processors (214) are further configured to follow smtc2 for SMTC periodicity; otherwise, the one or more processors (214) are configured to follow *smtc1* for SMTC periodicity.

5. The apparatus of any one of claims 1 to 4, wherein the one or more processors are further configured to perform the L1-RSRP measurement inside SMTC, and to perform measurements with a different subcarrier spacing than PDSCH/PDCCH on FR1 such that, if the UE (202) does not support *simultaneousRxDataSSB-Dif!Numerology,* and if *deriveSSB IndexFromCell* is enabled, the one or more processors are configured not to transmit PUCCH/PUSCH/SRS or receive PDCCH/PDSCH/TRS/CSI-RS for CQI on SSB symbols to be measured, and on 1 data symbol before each consecutive SSB symbols to be measured, and 1 data symbol after each consecutive SSB symbols to be measured within SMTC window duration.

6. The apparatus of claim 5, wherein, if the high layer signaling of *smtc2* is configured, the one or more processors are configured to follow an SMTC periodicity according to *smtc2;* otherwise the one or more processors are configured to follow an SMTC periodicity according to *smtc1.*

7. The apparatus of claim 5 or 6, wherein, if *deriveSSB IndexFromCell* is not enabled, the one or more processors (214) are configured to not transmit PUCCH/PUSCH/SRS or receive PDCCH/PDSCH/TRS/CSI-RS for CQI on all symbols within an SMTC window duration.

8. The apparatus of claim 7, wherein if the high layer signaling of *smtc2* is configured in TS 38.331, the one or more processors (214) are further configured to follow an SMTC periodicity of *smtc2;* otherwise, the one or more processors are configured to follow an SMTC periodicity of *smtc1.*

9. The apparatus of any one of claims 1 to 8, wherein, when L1-RSRP measurement is performed inside SMTC, the one or more processors (214) are further configured to not transmit PUCCH/PUSCH/SRS or receive PDCCH/PDSCH/TRS/CSI-RS for CQI on SSB symbols to be measured, and on 1 data symbol before each consecutive SSB symbols to be measured, and 1 data symbol after each consecutive SSB symbols to be measured within SMTC window duration.

10. The apparatus of claim 9, wherein, when the one or more processors (214) are further confirmed to perform an L1-RSRP measurement outside of SMTC, and if the UE (202) supports *simultaneousRxDataSSB-Dif!Numerology,* the one or more processors (214) are further configured to schedule a PUCCH/PUSCH/SRS transmission on a serving cell or a cell with different PCI due to L1-RSRP measurement without scheduling limitations.

11. The apparatus of claim 9 or 10, wherein, if the UE (202) does not support *simultaneousRxDataSSB-DiffNumerology,* and if a subcarrier spacing of PDSCH/PDCCH is different from subcarrier spacing of SSB on a cell with a different PCI, the one or more processors (214) are further configured not to transmit PUCCH/PUSCH/SRS from both serving cell and cell with different PCI on SSB symbols configured for L1-RSRP measurement, and on 1 data symbol before each consecutive SSB symbol and 1 data symbol after each consecutive SSB symbol.

12. The apparatus of any one of claims 9 to 11, wherein if a timing offset between a serving cell and a cell with a different PCI is smaller than a CP, the one or more processors (214) are further configured not to transmit PUCCH/PUSCH/SRS from both the serving cell and the cell with different PCI on SSB symbols configured for L1-RSRP measurement.

13. The apparatus of any one of claims 1 to 12, wherein, if L1-RSRP measurement is performed outside the SMTC, the one or more processors (214) are further configured not to transmit PUCCH/PUSCH/SRS or receive PDCCH/PDSCH/CSI-RS from both a serving cell and a cell with different PCI for tracking/CSI-RS for CQI on symbols corresponding to the SSB symbols configured for L1-RSRP measurement, and on 1 data symbol before each consecutive SSB symbols and 1 data symbol after each consecutive SSB symbols.

14. The apparatus of claim 13, wherein, if a timing offset between the serving cell and the cell with different PCI is smaller than CP, the one or more processors (214) are further configured not to transmit PUCCH/PUSCH/SRS or receive PDCCH/PDSCH/CSI-RS from both the serving cell and the cell with the different PCI for tracking/CSI-RS for CQI on symbols corresponding to the SSB symbols configured for L1-RSRP measurement

15. A non-transitory computer readable medium, comprising instructions which, if executed by one or more processors, cause the one or more processors to:
perform a Layer 1 Reference Signals Received Power (L1-RSRP) measurement that is defined for inside a Synchronization Signal Block-based Measurement Timing Configuration (SMTC) and outside the SMTC, respectively.
